# EUROPEAN PATENT APPLICATION

(11) **EP 4 468 118 A1**
(43) Date of publication of application: **27.11.2024**
(21) Application number: 23175130.6
(22) Date of filing: 24.05.2023
(51) Int. Cl.: G06F 3/01

(54) **SYSTEM, METHOD, AND COMPUTER PROGRAM FOR CONTROLLING A USER INTERFACE**

(71) Applicant: Leica Instruments (Singapore) Pte Ltd, Singapore 608924 (SG)
(72) Inventor: THEMELIS, George, 88131 Lindau (DE)
(74) Representative: 2SPL Patentanwälte PartG mbB

(57) **Abstract**

Examples relate to a system, method, and computer program for controlling a user interface. The system is configured to determine a position of a pointing indicator (130) used by a user relative to a three-dimensional user interface, select, based on the position of the pointing indicator, a user interface element (145) of the three-dimensional user interface, and control the user interface to change a display position of the selected user interface element in the three-dimensional user interface based on the position of the pointing indicator, such that the selected user interface elements appears to be positioned at a pre-defined distance from the pointing indicator.

## Description

### Technical field

Examples relate to a system, method, and computer program for controlling a user interface.

### Background

Gesture-based input refers to a way of interacting with a computer, mobile device, or any other electronic device through the use of gestures or movements made by the user's body. These gestures are captured by built-in sensors, such as cameras or depth sensors, and are translated into commands that the device understands. Examples of gesture-based input include swiping, pinching, tapping, shaking, or tilting a device to navigate through applications, adjust settings, or perform specific actions. Gesture-based input is becoming more and more common because it is a natural and intuitive way of interacting with technology, and it allows for hands-free or touch-free control, making it useful for people with physical disabilities.

In some cases, touch-free gestures are used to control the position of a pointer (e.g., cursor) in a user interface. For this purpose, the position of the hand of the user is captured, using a camera, in 2D or 3D, to control the cursor. For example, Tran et al: "Real-time virtual mouse system using RGB-D images and fingertip detection" and Argyros and Lourakis: "Vision-Based Interpretation of Hand Gestures for Remote Control of a Computer Mouse" show examples of this methodology. One aspect that makes contactless control counterintuitive as an experience is that the alignment between a fingertip and a virtual button of the user interface can cause some confusion in three-dimensional perception. In simple terms, it is not easy to spatially align two objects at substantially different distances.

There may be a desire for an improved concept for controlling a user interface.

### Summary

This desire is addressed by the subject-matter of the independent claims.

Various examples of the present disclosure are based on the finding, that the functionality and intuitiveness of a three-dimensional contactless user interface can be improved by taking into account the stereoscopic vision of the user. If a user interface element is placed at an arbitrary position in a three-dimensional user interface, and the user tries to use the user interface element, it is likely that the position of the user element, as perceived by the eyes of the user, differs, depending on which eye is being used. If the user focuses on the user interface element, it is perceived at a certain position. However, to use the user interface element, the user needs to reconcile the position of the user interface element with the position of a pointing indicator (e.g., finger) used by the user. Once the user focuses on the position of the pointing indicator, the position of the user interface element becomes ambiguous, as the eyes of the user perceive the user interface elements at two different positions. This can be overcome by determining the position of the pointing indicator, and then moving, by changing the position of the user interface element in the three-dimensional user interface, the user interface element to a pre-defined position relative to the pointing indicator, e.g., just behind the pointing indicator. This leads to a more natural and intuitive user interface, through an easier alignment of the pointing indicator (e.g., fingertip) and the user interface element (e.g., a virtual button). Moreover, as the position of the user interface element is being changed, the user receives a confirmation of the user interface element (e.g., button) being active, which helps the user to concentrate on a specific control. Thus, the experience and functionality of contactless control is improved by improving or optimizing the user interface (UI), e.g., on a 3D display.

Some aspects of the present disclosure relate to a system for controlling a user interface. The system comprises one or more processors. The system is configured to determine a position of a pointing indicator used by a user relative to a three-dimensional user interface. The system is configured to select, based on the position of the pointing indicator, a user interface element of the three-dimensional user interface. The system is configured to control the user interface to change a display position of the selected user interface element in the three-dimensional user interface based on the position of the pointing indicator, such that the selected user interface elements appears to be positioned at a pre-defined distance from the pointing indicator. As outlined above, this leads to a more natural experience when controlling the user information, and thus to an improved concept for controlling a user interface.

For example, the pointing indicator may be one of a finger of the user and a pointing device held by the user. A finger is a useful pointing indicator, as it does not require picking up another device to perform the pointing operation. However, the user interface can also be controlled using a pointing device, such as a pointing stick, pen, or scalpel, held by the user, which enables control of the user interface without having to drop the pointing device, e.g., without having to put down a scalpel during a surgical procedure.

In general, the goal may be to align the position of the pointing device with the position of the user interface element, such that the user can unambiguously reconcile the position of both. Therefore, the system may be configured to control the user interface to change the display position of the selected user interface element in the three-dimensional user interface to a position that appears to be at a distance of at most 5 cm from the position of the pointing indicator. This facilitates use of the user interface element by the user.

Touch-free gesture-based control of user interfaces is often deemed unintuitive, as a pointer being controlled via gesture control is controlled regardless of the point of view of the user. Instead, the pointer is often controlled in a linear fashion, which is not intuitive, as, from the point of view of the user, the further away the user interface is, the further the pointer travels. This becomes apparent once the user points at a portion of the user interface that is laterally offset to the user's position in front of it. To improve the intuitiveness, and thus also confidence and speed with which the user interface can be controlled, the user's point of view may be determined by determining the position of two points of reference, one on the body (e.g., the face, such as an eye or between the eyes) and another one at a pointing indicator (such as a finger, a scalpel, or a pointing stick). From these two points of reference, a position on the user interface, and/or an element of the user interface (such as a button or other user interface element) can be determined, and the user interface can be controlled accordingly. Accordingly, the system may be configured to determine a position of at least one point on a body of the user relative to the three-dimensional user interface, and to select the user interface element further based on the position of the at least one point on the body. This improves the intuitiveness of controlling the user interface.

For example, the system may be configured to project at least one imaginary line through the at least one position of the point on the body and the position of the pointing indicator towards the user interface. The system may be configured to select the user interface element based on an intersection of the at least one imaginary line and the three-dimensional user interface. This way, the element the user is pointing at, from the user's point of view, may be selected.

In addition to the point of view of the user being used to select the user interface element, it may also be used to determine the display position of the selected user interface element. In other words, the system may be configured to determine the display position of the selected user interface element further based on the position of the point on the body. As a result, the position and orientation of the user interface element may appear more natural to the user.

In some examples, the system may be configured to control the user interface to animate a transition of the display position of the selected user interface element from an initial display position of the selected user interface element to the display position at the pre-defined distance from the pointing indicator. By including an animation, a visual affordance is provided that signals to the user that the user interface element is ready to be used.

Apart from the animation, other visual affordances may be provided as well. For example, the system may be configured to control the user interface to change an opacity of the selected user interface element while the user interface element is shown at the changed display position. For example, the opacity may be increased vis-à-vis other user interface elements that are not selected, highlighting to the user that this specific user interface element is ready to be used.

In some examples, the system may be configured to control the user interface to change a shape of the selected user interface element while the user interface element is shown at the changed display position. This way, the selected user interface element may be expanded when it is selected, and contracted when it is not, which may be used to increase the options the user has for interacting with the user interface element when it is selected, while reducing the footprint of the user interface element when it is not selected, such that a larger number of user interface elements can be shown at the same time in the user interface.

In particular, the system may be configured to control the user interface to sub-divide or extend the selected user interface element into a group of two or more user interface elements. The system may be configured to control the user interface to set the display position of the group of two or more user interface elements such that the group of two or more user interface elements appears to be positioned at the pre-defined distance from the pointing indicator. This way, the selected user interface element may be expanded when it is selected, which can be used to increase the options the user has for interacting with the user interface element when it is selected.

For example, the user interface element may be one of a button, a display element, a menu, a radio button, a checkbox, a rotational input, and a slider. Such user interface elements can be used to control various aspects of a machine being controlled by the user interface.

To manipulate the user interface elements, hand gestures may be used. For example, the system may be configured to identify a hand gesture being performed by the user, and to control the user interface based on the selected user interface element and based on the identified hand gesture. This may allow a direct manipulation of the selected user interface element, and thus also improve the intuitiveness of the operation.

There are various ways to determine the position of the pointing indicator (and, optionally, of the point on the body of the user). For example, the system may be configured to process at least one of depth sensor data of a depth sensor, imaging sensor data of a camera sensor and stereo imaging sensor data of a stereo camera to determine at least the position of the pointing indicator (and, optionally, of the point on the body of the user). For example, sensors that enable determination of a 3D position of the respective points, such as the stereo imaging sensor data or the depth sensor data, may be particularly suitable for determining the position of the pointing indicator and/or position on the body of the user. To improve the quality of the determination of the respective positions when depth sensor data is used, the depth sensor data may be used together with (co-registered) imaging sensor data.

In various examples, the three-dimensional user interface may be based on providing a first image to a first eye of the user and a second image to a second eye of the user. For example, the system may be configured to control the user interface to change the display position of the selected user interface element in the three-dimensional user interface, such that the selected user interface elements appears to be positioned at a pre-defined distance from the pointing indicator, by including the user interface element at different positions in the first and second image. By placing the position of the user interface elements at different positions in the two channels, the position of the user interface element in the three-dimensional user interface can be changed to the pre-defined position relative to the pointing indicator.

In some examples, the three-dimensional user interface is a user interface that is shown on a screen (or projected onto a projection surface). For example, the system may be configured to generate a display signal, the display signal comprising the user interface, and to provide the display signal to a display device or projection device. Thus, the proposed concept may be used in a user interface that is shown via a display device or projection device.

In addition, or as an alternative, to visual feedback, tactile feedback may be given. For example, the system may be configured to control an emitter of a contactless tactile feedback system based on the selected user interface element, and to provide tactile feedback to the user using the emitter according to the selected user interface element. This may further improve the intuitiveness of using the user interface.

Some aspects of the present disclosure relate to a method for controlling a user interface. The method comprises determining a position of a pointing indicator used by a user relative to a three-dimensional user interface. The method comprises selecting, based on the position of the pointing indicator, a user interface element of the three-dimensional user interface. The method comprises controlling the user interface to change a display position of the selected user interface element in the three-dimensional user interface based on the position of the pointing indicator, such that the selected user interface elements appears to be positioned at a pre-defined distance to the pointing indicator.

An aspect of the present disclosure relates to computer program with a program code for performing the above method when the computer program is run on a processor.

### Short description of the Figures

Some examples of apparatuses and/or methods will be described in the following by way of example only, and with reference to the accompanying figures, in which:
- Fig. 1a: shows a block diagram of an example of a system for controlling a user interface;
- Fig. 1b: shows a schematic diagram of an example of possible positions of a user interface element in two channels;
- Fig. 1c: shows a schematic diagram of an example of a resulting perceived position of a user interface element;
- Fig. 1d: shows a schematic diagram of an example of a three-dimensional user interface with five user interface elements;
- Fig. 1e: shows a schematic diagram of an example of a user interface element being extended into four user interface elements;
- Fig. 1f: shows a schematic diagram of examples of points of reference at a body of a user and at a pointing indicator when a user interface is shown on a screen;
- Fig. 1g: shows a schematic diagram of an example of a surgical imaging system comprising the system;
- Fig. 2: shows a flow chart of an example of a method for controlling a user interface;
- Figs. 3a and 3b: show an illustration of a user's stereoscopic perception of a user interface element in a three-dimensional user interface;
- Fig. 4: shows use of a rotating button as user interface element;
- Fig. 5a: shows a schematic drawing of a display device with ultrasonic emitters;
- Fig. 5b: shows a schematic drawing of haptic zones with different tactile feedback;
- Fig. 5c: shows a schematic drawing of haptic feedback while moving a microscope;
- Figs. 5d and 5e: show schematic drawing of haptic feedback while operating a rotational user interface element via gesture control; and
- Fig. 6: shows a schematic diagram of an example of a system comprising an optical imaging device and a computer system.

### Detailed Description

Various examples will now be described more fully with reference to the accompanying drawings in which some examples are illustrated. In the figures, the thicknesses of lines, layers and/or regions may be exaggerated for clarity.

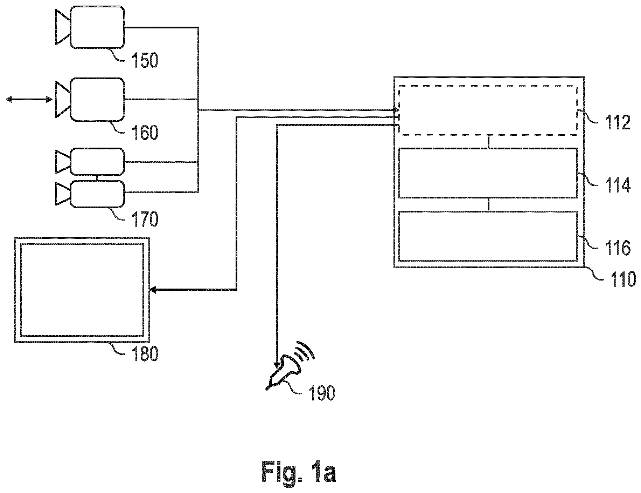

Fig. 1a shows a schematic diagram of an example of a system 110 for controlling a user interface. In general, the system 110 may be implemented as a computer system. The system 110 comprises one or more processors 114 and, optionally, one or more interfaces 112 and/or one or more storage devices 116. The one or more processors 114 are coupled to the one or more storage devices 116 and to the one or more interfaces 112. In general, the functionality of the system 110 may be provided by the one or more processors 114, in conjunction with the one or more interfaces 112 (for exchanging data/information with one or more other components, such as a depth sensor 160, a camera sensor 150, a stereo camera 170, a display device 180, a projection device 185 and/or an emitter 190 of a contactless tactile feedback system), and with the one or more storage devices 116 (for storing information, such as machine-readable instructions of a computer program being executed by the one or more processors). In general, the functionality of the one or more processors 114 may be implemented by the one or more processors 114 executing machine-readable instructions. Accordingly, any feature ascribed to the one or more processors 114 may be defined by one or more instructions of a plurality of machine-readable instructions. The system 110 may comprise the machine-readable instructions, e.g., within the one or more storage devices 116.

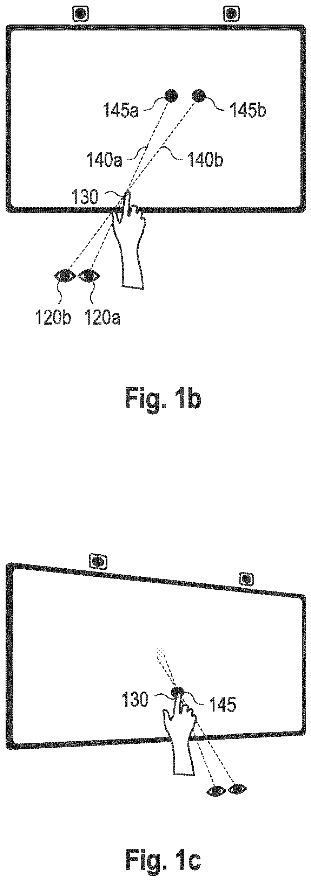

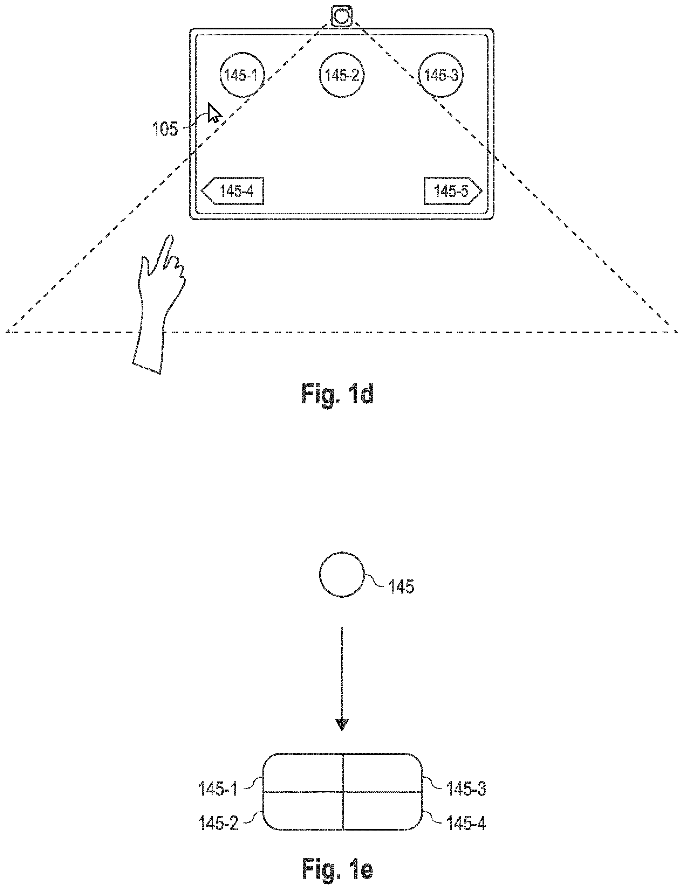

In the following, the functionality of the system is illustrated with respect to Figs. 1b, 1c and 1d, in which eyes 120a; 120b of a user 10, a pointing indicator 130, one or more imaginary lines (140; 140a; 140b) and a user interface element (145; 145a-d) are shown. The system 110 is configured to determine a position of a pointing indicator 130 used by a user relative to a three-dimensional user interface 100 (shown in the background as a screen). The system 110 is configured to select, based on the position of the pointing indicator, a user interface element 145 of the three-dimensional user interface. The system 110 is configured to control the user interface to change a display position of the selected user interface element in the three-dimensional user interface based on the position of the pointing indicator, such that the selected user interface elements appears to be positioned at a pre-defined distance from the pointing indicator.

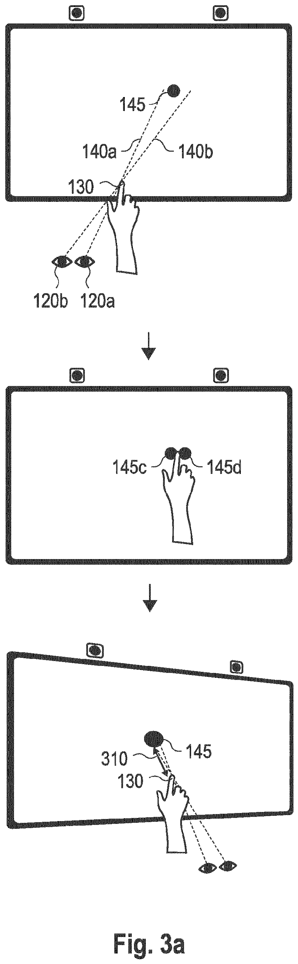

A three-dimensional user interface is a user interface that uses three-dimensional (3D) space to interact with and display information. Examples of three-dimensional user interfaces include virtual reality systems, augmented reality applications, and 3D modeling tools. In the present disclosure, contactless gestures are used to navigate through a virtual 3D environment to control the three-dimensional user interface. Various examples of the present disclosure are based on the finding, that the use of a three-dimensional user interface (i.e., a user interface shown on a 3D display, 3D projection, holographic projection, that supports showing user interface elements at different depths relative to a user) via gesture-based control is often deemed unintuitive, at is hard to reconcile the position of a user interface element with the position of a pointing indicator being used to control the three-dimensional user interface. However, when the user focuses on the pointing indicator (e.g., the user's finger), due to stereoscopic vision, the user may not be able to unambiguously perceive the position of the user interface elements, as the position of the user interface element appears at different positions, depending on which eye the user uses. This is illustrated in Fig. 3a, which shows an illustration of a user's stereoscopic perception of a user interface element, such as a button 140, in a three-dimensional user interface. In Fig. 3a, the upper image indicates what the screen shows, the middle image indicates what the user sees, and the lower image shows what the user perceives. In the upper image of Fig. 3a, the position of the eyes 120a; 120b are shown, together with the position of the pointing indicator 130 (e.g., finger) and two imaginary lines 140a; 140b originating from the positions of the eyes 120a; 120b and terminating at two different points of the user interface. The user interface element 145 is between the two termini of the imaginary lines. As a result, when the uses focuses on the pointing indicator 130, the user perceives the user interface element 145 at two different positions 145c; 145d, depending on the eye being used. The stereoscopic vision prevents the user from seeing the fingertip overlaying a virtual button as if they were physically at the same distance. On the contrary, the user sees either two buttons 145a; 145d or two fingertips, depending on where the user is focusing. As a result, some users tend to resolve this perception conflict by closing one eye.

In the proposed concept, this difficulty is overcome by placing the user interface element in close proximity to the pointing indicator, e.g., directly behind (as seen from the point of view of the user) the pointing indicator, "inviting" the user to use the user interface element. This is done by controlling the user interface to change the display position of the selected user interface element in the three-dimensional user interface based on the position of the pointing indicator, such that the selected user interface elements appears to be positioned at a predefined distance from the pointing indicator. In other words, the position of the selected user interface element is changed to a position indicated by the position of the pointing indicator, such that the user interface element appears to be near (e.g., at or directly behind) the pointing indicator, which may be achieved by varying the positioning of the user interface elements along a z-axis extending outwards from the three-dimensional user interface, and optionally along the corresponding x- and y axis. The positioning along the z-axis may be changed to reduce the perceived distance between the user interface element and the pointing indicator. For example, the system may be configured to control the user interface to change the display position of the selected user interface element in the three-dimensional user interface to a position that appears to be at a distance of at most 5 cm (or at most 4 cm, at most 3 cm, at most 2 cm, at most 1 cm) from the position of the pointing indicator. In three-dimensional user interfaces, such a positioning along the z-axis (reaching outwards from the three-dimensional user interface) can be achieved by placing the user interface element at different positions in the three-dimensional user interface, depending on which eye the image is provided to. To differentiate which eye an image of the three-dimensional user interface is presented to, shutter glasses or glasses admitting light of different polarizations to the different eyes may be used. Shutter glasses are a type of 3D glasses that work by isolating the left and right eyes from each other. The glasses use liquid crystal technology to rapidly alternate the view for each eye, blocking one eye while allowing the other to see an image. This process is synchronized with the 3D content on the screen. Glasses that use different polarizations for the left and right eye have a similar effect, also isolating the left and right eyes from each other. In this case, the light of the image to be presented to the left eye has a different polarization than the light of the image to be presented to the right eye, and polarization filters being part of the glasses are used to admit the light of one polarization to the respective eye and block the other, such that the different eyes perceive different images. In both techniques, each eye is seeing a slightly different perspective of the same image of the three-dimensional user interface, creating the illusion of depth and a three-dimensional effect. The respective glasses are usually paired with a display device or projection device that has a high refresh rate (in case of shutter glasses) or the ability to emit light separately in different polarization (in the other case), to display the three-dimensional user interface to the user.

The ability to show different images to the two eyes enables the three-dimensional effect. To change the placement of the user interface element along the z-axis, to place the user interface element (directly) behind the pointing indicator, the user interface element is shown at different positions in the user interface, such that the user perceives the user interface element at a desired depth. In other words, the three-dimensional user interface may be based on providing a first image to a first eye of the user and a second image to a second eye of the user. The system may be configured to control the user interface to change the display position of the selected user interface element in the three-dimensional user interface, such that the selected user interface elements appears to be positioned at a pre-defined distance from the pointing indicator, by including the user interface element at different positions 145a, 145b in the first and second image. This effect is illustrated in Figs. 1b and 1c. Fig. 1b shows a schematic diagram of an example of possible positions of a user interface element in two channels (i.e., the first and second image shown to the first and second eye of the user). As shown in Fig. 1b, when the same user interface element 145 is rendered at different positions 145a; 145b in the different channels, according to imaginary lines 140a; 140b from the eyes 120a; 120b of the user through the focusing point (the pointing indicator 130) towards the respective positions 145a; 145b in the first and second image, the user interface element 145 appears to be at the position of the pointing indicator 130, as illustrated in Fig. 1c. Fig. 1c shows a schematic diagram of an example of a resulting perceived position of the user interface element 145 at the pointing indicator 130.

In many user interfaces, more than one user interface element is present. For example, Fig. 1d shows a schematic diagram of an example of a three-dimensional user interface with five user interface elements 145-1 to 145-5 (of which user interface elements 145-4 and 145-5 are back and forward buttons, respectively), and an indicator 105 for highlighting the position the user is pointing at in the three-dimensional user interface. These user interface elements may have different types. While the present concept has, thus far, been explained with respect to virtual buttons that are at the fingertips of the respective user, other types of user interface elements may be implemented as well. For example, the user interface element may be one of a button, a display element, a menu, a radio button, a checkbox, a rotational input (e.g., a virtual rotational knob) and a slider. To provide visual feedback to the user with respect to the selected user interface element, the selected user interface element may be differentiated from other user interface elements that are not selected. Such visual feedback may be accomplished using different techniques. For example, one type of visual feedback relates to animating the change in position of the selected user interface element. In other words, the system may be configured to control the user interface to animate a transition of the display position of the selected user interface element from an initial display position of the selected user interface element (i.e., the position of the user interface element prior to being selected) to the display position at the pre-defined distance from the pointing indicator. For example, the system may be configured to control the user interface to gradually move the selected user interface element from the initial display position to the display position at the pre-defined distance from the pointing indicator. The animation of the transition may also affect the size, shape and/or opacity of the selected user interface. For example, the user interface element may be perceived to increase in size as the selected user interface element from the initial display position to the display position at the pre-defined distance from the pointing indicator. Additionally, or alternatively, the system may be configured to control the user interface to change (e.g., increase) an opacity (i.e., decrease a transparency) of the selected user interface element while the user interface element is shown at the changed display position (i.e., at the display position at the pre-defined distance from the pointing indicator. Additionally, or alternatively, the system may be configured to control the user interface to change a shape of the selected user interface element while the user interface element is shown at the changed display position.

A variation of the latter effect is shown in Fig. 1e. In Fig. 1e, the selected user interface element 145, which initially has a circular shape, is changed into having a rectangular shape with rounded corners, and then sub-divided into four separate user interface elements 145-1 to 145-4, providing a sub-menu for controlling four different aspects via the three-dimensional user interface. Fig. 1e shows a schematic diagram of an example of a user interface element 145 being extended into four user interface elements 145-1 to 145-4. In more general terms, the system may be configured to control the user interface to sub-divide or extend the selected user interface element into a group of two or more user interface elements. In this context, sub-dividing the user interface element may occur without changing the shape of the user interface element (apart from the size) and extending the user interface element may comprise changing the shape and sub-dividing the changed shape into different user interface elements, or sub-dividing the initial magnified shape into different shapes corresponding to different user interface element. In this case, the resulting two or more user interface elements are placed at the pre-defined distance from the pointing indicator. In other words, the system may be configured to control the user interface to set the display position of the group of two or more user interface elements such that the group of two or more user interface elements appears to be positioned at the pre-defined distance from the pointing indicator.

The selection of the user interface element and positioning of the user interface element is based on the position of the pointing indicator. For this purpose, the system the system is configured to determine the position of a pointing indicator 130 used by a user relative to a three-dimensional user interface, and to select, based on the position of the pointing indicator, the user interface element 145 of the three-dimensional user interface. This can be done by sensing the position of the pointing indicator, which may be a finger of the user, or a pointing device held by the user, such as a pen or a scalpel, using one or more suitable sensors. For example, the system may be configured to process at least one of depth sensor data of a depth sensor 160, imaging sensor data of a camera sensor 150 and stereo imaging sensor data of a stereo camera 170 to determine at least the position of the pointing indicator. Additionally, the system may be configured to process the respective sensor data to determine at least one position on the body of the person, as will become evident in the following.

In the present context, various positions are used, such as the position of the pointing indicator (which is, in the following, also denoted second point of reference), the position on the body of the person (which can be used to determine first point of reference), and the position of the user interface element. These positions may be defined in a (or several) coordinate systems. For example, the first and second point of reference may be defined in a world coordinate system. If the coordinates of the three-dimensional user interface are known, e.g., also defined in the world coordinate system (which may be defined relative to the user interface), the imaginary line can be projected through the first and second points of reference towards the user interface, and the point of in the user interface (and element intersecting with the point) can be determined based on the point of intersection of the imaginary line. If another technique is used, such as a look-up table or trained machine-learning model, similarly, a world coordinate system or two separate coordinate systems may be used for the points of reference and the user interface.

To determine the position or positions (of the first and/or second point of reference), various techniques may be used. In the context of the present disclosure, determination of the point on the body of the person, and thus of the first point of reference is optional. However, it enables a more intuitive use of the user interface, as will be outlined in the following.

To improve the intuitiveness of controlling a user interface by pointing at it, not only the pointing indicator being used (e.g., the hand, or a pointing stick) may be tracked, but also another point of reference, which is used, together with the pointing indicator, to establish where the user is pointing from the user's point of view. Therefore, in some examples, two points of reference are determined - a first point of reference at the body of the person (e.g., at the head/face, or at the sternum), and a second point of reference at a pointing indicator used by the person (e.g., at the hand/index finger, or at a pointing device, such as a pointing stick, pen, pencil, or scalpel). Using these two points of reference, not only the relative motion of the pointing indicator can be tracked, but an extrapolation can be made to determine the user interface element the user is pointing at. Therefore, the first and second point of reference may be determined. In particular, the system may be configured to determine a position of at least one point 120a, 120b on a body of the user relative to the three-dimensional user interface, and to select the user interface element further based on the position of the at least one point on the body, i.e., based on the position of the pointing indicator and based on the position of the at least one point of the body. Accordingly, the system may be configured to determine the display position of the selected user interface element further based on the position of the point on the body. In the following, the position of the pointing indicator is also denoted second point of reference, and a position that is derived from the at least one point on the body is also denoted first point of reference.

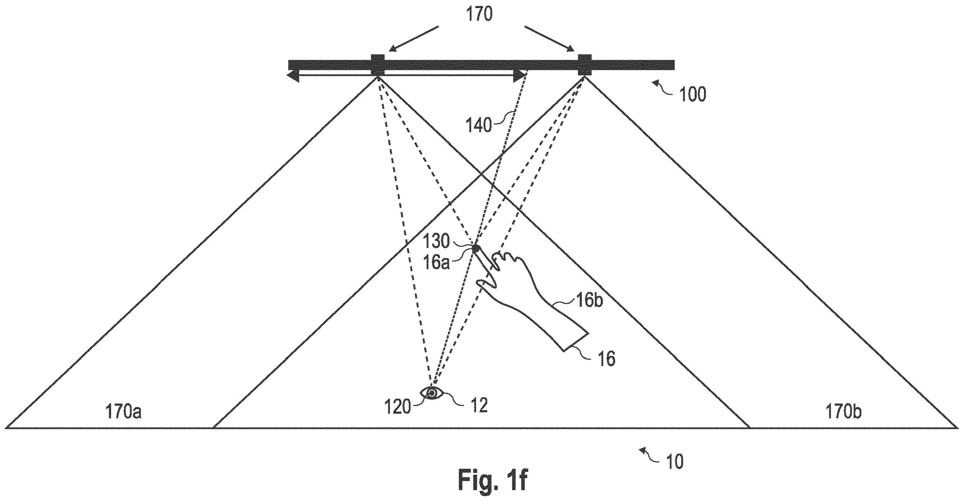

For example, the system 110 may be configured to determine the position of the first point of reference 120 based on a position of a first point on the body of the user 10. As outlined above, this first point on the body of the user is a point that can be used as starting point for establishing the point of view of the user. Therefore, the first point may preferably a point at the head/face of the user, such as the forehead, an eye 12 (as shown in Figs. 1f), the position between two eyes 12, the nose, or the chin of the user. In other words, the system may be configured to determine the first point of reference based on the position of one or both eyes of the user (as shown in Figs. 1b, 1c. for example). As most humans use stereoscopic vision, the selection of an eye (or both eyes) as first point of reference may be supported by heuristics or machine-learning-based approaches to further improve the precision. As a compromise, the system may be configured to determine the first point of reference based on the position of both eyes 12 of the user (e.g., between the positions of both eyes). Alternatively, a (system) pre-defined eye or a user-defined eye (e.g., the left or right eye) may be used. In other words, the system may be configured to determine the first point of reference based on the position of a pre-defined or user-defined eye 12 of the user. Alternatively, the system may be configured to select one of the eyes based on the second point of reference, and in particular based on the proximity to the second point of reference. In other words, the system may be configured to determine the first point of reference based on a position of the eye 12 of the user being in closer proximity to the second point of reference. Alternatively, the system may be configured to determine a dominant eye of the user, e.g., by processing imaging sensor data or stereo imaging sensor data to determine whether the user occasionally only uses one eye (and closes the other) and selecting the eye that remains open as dominant eye. Alternatively, the dominant eye may be determined based on previous attempts of the user at controlling the user interface. For example, the system may be select an eye as dominant eye by initially calculating two positions (and intersecting elements) in the user interface based on two different first points of reference based on the positions of both eyes, and determining one of the eyes as dominant eye if a corresponding position in the user interface intersects with a user interface element. In other words, the system may learn which eye is dominant from inference and use this eye for future calculations. The system may be configured to determine the first point of reference based on a position of the dominant eye 12 of the user. In some examples, as highlighted in Fig. 1b, both eyes of the user may be used as first points 120a; 120b of reference.

In addition to the first point of reference, the system may determine a position of the second point of reference 130 based on the position of a pointing indicator 16 (shown in Fig. 1f) used by the user (the position of the pointing indicator and the second point of reference 130 may correspond to each other). In the present disclosure, the term "pointing indicator" is used, which can both refer to a hand or finger (preferably index finder) being used to point at the user interface and to a tool that is being used for pointing at the user interface. In other words, the pointing indicator 16 is an entity (body part or tool) being used to point at the user interface. Accordingly, the system may be configured to determine the second point of reference based on a position of a finger 16a of the hand of the user. Additionally, or alternatively, the system may be configured to determine the second point of reference (e.g., the position of the pointing indicator) based on a position of a pointing device held by the user. In many cases, both may be an option - if the user uses their hand to point at the user interface, the position of the finger may be used, if, however, the user uses a tool, such as a pen, pencil, pointing stick, scalpel, endoscope etc. that can be considered an extension of the hand, the tool may be used. For example, the system may be configured to determine whether the user is holding a pointing device (e.g., tool/object) extending the hand towards the user interface, and to select the finger of the user if the user is pointing towards the user interface without such a tool/object, and to select the pointing device if the user is pointing towards the user interface with a pointing device. For example, a machine-learning model may be trained, using supervised learning and (stereo) imaging data and/or depth sensor data and corresponding labels, to perform classification as to whether the user is holding a pointing device, and to perform the selection based on the trained machine-learning model. Alternatively, or additionally, image segmentation techniques may be used. The second point of reference may be determined accordingly, based on the position of (a tip of) the finger and based on the position of (a tip of) the pointing device.

In some examples, the user may intuitively swivel (i.e., adjust the pointing direction of) their finger (or pointing device, for that matter) to make fine corrections to the position the user is pointing at. Such swiveling motions may be taken into account too. For example, the system may be configured to determine the second point of reference based on a position of a wrist 16b and based on a position of one of an index finger 16a of the hand of the user and a pointing device held by the user. For example, the position of the second point of reference may be adjusted such, that the resulting intersection point in the user interface when an extrapolated line (in the following also denoted imaginary line) passing through the first and second point of reference up to the user interface is determined, is adjusted in line with the swiveling motion of the finger (and, in some case, disproportional to the change in position of the tip of the index finger).

To determine the respective points on the body (e.g., head, sternum), hand or pointing device, sensor data may be processed. For example, as shown in Fig. 1a, the system may be configured to obtain sensor data from one or more of a depth sensor 160, a camera sensor 150 (which may be combined with the depth sensor 160 to provide RGB-D (Red, Green, Blue-Depth) sensor data) and a stereo camera 170 (i.e., two camera sensors forming a stereo pair), and to determine the positions on the body, hand and/or pointing device based on the respective sensor data. In other words, the system may be configured to process at least one of depth sensor data of a depth sensor 160, imaging sensor data of a camera sensor 150, combined RGB-D sensor data of a combined depth sensor and camera sensor, and stereo imaging sensor data of a stereo camera 170 to determine at least one of the position of the first point of reference and the position of the second point of reference.

As both points of reference are at least related to parts of the body of the user (with the first point of reference being on the body, and the second point of reference being part of the hand or held by a hand of the user), three-dimensional (human) pose estimation may be applied on the respective sensor data to determine the respective points of reference. There are various algorithms and machine-learning-based approaches for generating three-dimensional pose-estimation data from two- and three-dimensional video data. They usually include generation of a three-dimensional skeletal model of the user based on the respective sensor data. Accordingly, the system may be configured to determine the positions of joints of a (three-dimensional) skeletal model of the body of the user by processing the respective sensor data. In the context of the present disclosure, the term "skeletal model" might not be understood in a biological sense. Instead, the skeletal model may refer to a pose-estimation skeleton, which is merely modeled after a "biological" skeleton. Thus, the generated three-dimensional pose-estimation data may be defined by a position of joints of a skeleton in a three-dimensional coordinate system, with the joints of the one or more skeletons being interconnected by limbs. Similar to above, the terms "joints" and "limbs" might not be used in their strict biological sense, but with reference to the pose-estimation skeleton referred to in the context of the present disclosure. Such a skeletal model may be generated using the respective sensor data specified above. Accordingly, the system may be configured to process at least one of the depth sensor data, the imaging sensor data, the combined RGB-D sensor data, and the stereo imaging sensor data to determine the skeletal model of the user. For example, machine-learning algorithms and machine-learning models that are known from literature or that are available off the shelf may be used for this purpose. Examples of such algorithms and models are given in the following. For example, Mehta et al: "vNect: Real-time 3D Human Pose Estimation with a Single RGB Camera" (2017) provide a machine-learning based three-dimensional pose estimation algorithm for generating a three-dimensional skeletal model from imaging data. Zhang et al: "Deep Learning Methods for 3D Human Pose Estimation under Different Supervision Paradigms: A Survey" (2021) provide a machine-learning based three-dimensional pose estimation algorithm for generating a three-dimensional skeletal model from RGB-D data. Lallemand et al: "Human Pose Estimation in Stereo Images" provide a machine-learning based three-dimensional pose estimation algorithm for generating a three-dimensional skeletal model from stereo imaging sensor data. Alternatively, an application-specific machine-learning model may be trained, in line with the approaches listed above.

The resulting skeletal model may now be used to determine the points of reference. In other words, the system may be configured to determine at least one of the position of the first point of reference and the position of the second point of reference based on the positions of the joints of the skeletal model. For example, the skeletal model may include, as joints, one or more of the position of the eyes of the user, the position of the forehead of the user, the position of the tip of the nose of the user, the position of the wrists of the user, the position of the tips of the (index) fingers of the user. In addition, the skeletal model may include an additional point representing the tip of a pointing device being held by the user. For example, the machine-learning model may be trained to include such an additional point in the skeletal model. Alternatively, the system may be configured to determine whether the user is using a pointing device to point at the user interface, to determine a position of the tip of the pointing device relative to a point on the hand of the user (based on the skeletal model and based on the respective sensor data), and to add a joint representing the tip of the pointing device to the skeletal model. For example, another machine-learning model may be trained to output the position of the tip of the pointing device relative to a point on the hand of the user, e.g., using supervised learning. For example, such a machine-learning model may be trained as regressor, using a skeletal model and the respective sensor data as input, and the relative position as desired output.

The first and second point of reference may now be used to select the user interface element. For this purpose, the system may be configured to project at least one imaginary line 140 through the at least one position of the point on the body and the position of the pointing indicator towards the three-dimensional user interface, and to select the user interface element based on an intersection of the at least one imaginary line and the three-dimensional user interface. The selected user interface element may correspond to a user interface element (i.e., element of the user interface) that overlaps with the point or position where the imaginary line intersects with the three-dimensional user interface. However, the proposed concept is not limited to using a geometric approach that is based on projecting an imaginary line. Instead, a look-up table may be used to determine the user interface element, or a machine-learning model may be trained to output the position, from which the element or device can be determined (similar to the case where an imaginary line is used). In this case, supervised learning may be used to train such a machine-learning model, using coordinates of the first and/or second point of reference, and optionally coordinates of the user interface, as training input and information on a position in the user interface as desired output.

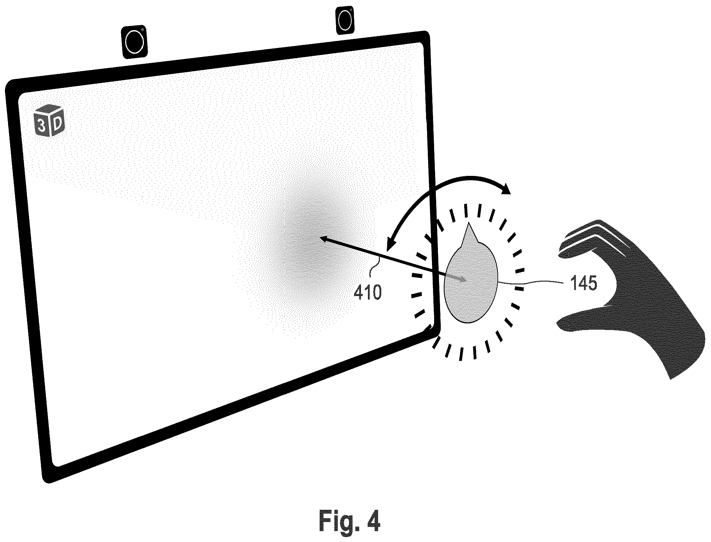

To control the user interface, hand gestures may be used. For example, the system may be configured to identify a hand gesture being performed by the user, and to control the user interface based on the selected user interface element and based on the identified hand gesture. For example, the system may be configured to process the sensor data, using a machine-learning model, to determine the hand gesture being used. Such a machine-learning model may be trained, using supervised learning, as a classifier, using the respective sensor data as input data and a classification of the gesture as desired output. For example, examples of such a machine-learning model and algorithm can be found in Bhushan et al: "An Experimental Analysis of Various Machine Learning Algorithms for Hand Gesture Recognition" (2022). Various hand gestures may be identified and used to control the user interface. For example, the system may be configured to identify at least one of a clicking gesture, a confirmation gesture, a rotational gesture, a pick gesture, a drop gesture, and a zoom gesture. For example, to perform the clicking gesture, the pointing indicator may be moved intentionally towards the user interface, e.g., for a pre-defined distance in at most a pre-defined time. This gesture may be used to select or actuate a user interface element. To perform the rotational gesture, the user may rotate the hand, as illustrated in Fig. 4. This gesture may be used to control a rotational input or rotational knob of the user interface. To perform the pick gesture and the drop gesture, the user may first move the pointing indicator intentionally towards an element of the user interface, draw the pointing indicator back towards the body (pick gesture), and move the pointing indicator towards another position in the user interface (drop gesture). To perform the zoom gesture, the user may move the hand, with palm pointed towards the user interface, towards or away from the user interface. Alternatively, the gestures may be implemented differently, and/or used to control different elements of the user interface.

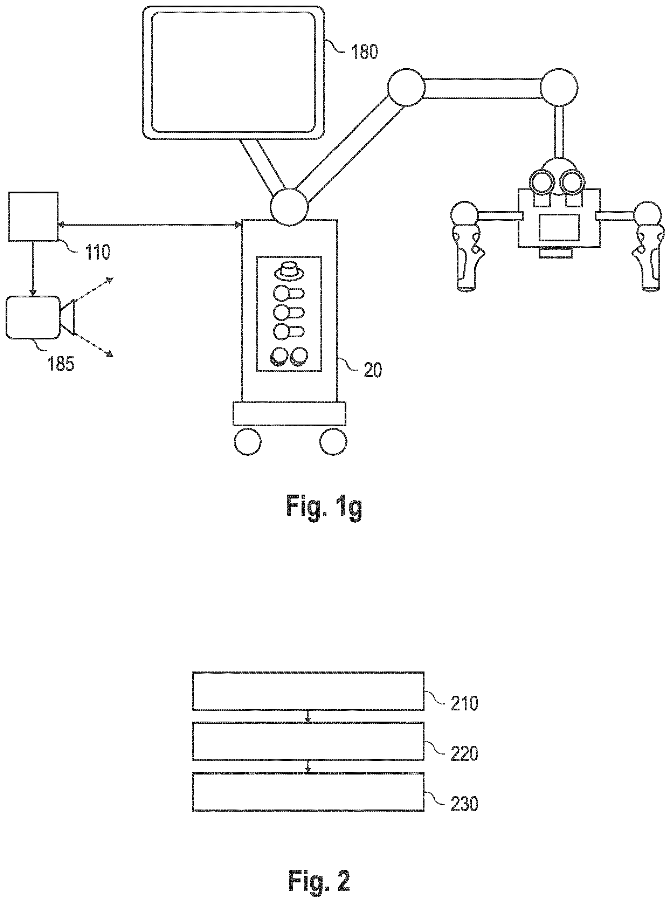

To increase the confidence of the user controlling the user interface, visual feedback may be given to the user. In particular, the system may be configured to highlight a determined position in the user interface continuously using a positional indicator 105 (as shown in Fig. 1d). In a screen-based user interface (as shown in Figs. 1b-1d, 1f) or projection-based user interface (as shown as one example in Fig. 1g), such a positional indicator may be included in the representation of the three-dimensional user interface itself, e.g., overlaid over the user interface. For example, the system may be configured to generate a display signal, with the display signal comprising the user interface (e.g., and the positional indicator). The system may be configured to provide the display signal to a display device 180, such as a display screen or a head-mounted display or to a projection device 185.

To allow the user to grasp the mechanism, the positional indicator may be provided in a shape that conveys whether the system has determined the correct position or item. For example, the system may be configured to generate the positional indicator with the shape of a hand based on a shape of the hand of the user. For example, the system may be configured to compute the shape of the hand of the user based on the respective sensor data, and generate the positional indicator based on the shape of the hand of the user (or based on a simplified hand shape). For example, the system may be configured to generate the shape of the positional indicator such, that, form the point of view of the user, the shape of the positional indicator extends beyond the shape of the hand of the user, e.g., by "exploding" the shape by a pre-defined absolute margin, such that the user can see the shape even if the hand partially obscures the user interface. Alternatively, the system may be configured to determine the position of the positional indicator such, that, form the point of view of the user, the positional indicator is offset by a pre-defined or user-defined offset (e.g., in two dimensions).

In addition, a visual representation of the identified hand gesture may be shown, e.g., as a pictogram representation of the hand gesture or of the functionality being controlled by the hand gesture. For example, the system may be configured to display a visual representation of the identified hand gesture via a display device 180 (e.g., a 3D screen for use with shutter glasses or polarized glasses) or via a projection device 185 (e.g., for use with shutter glasses, or for projecting a hologram).

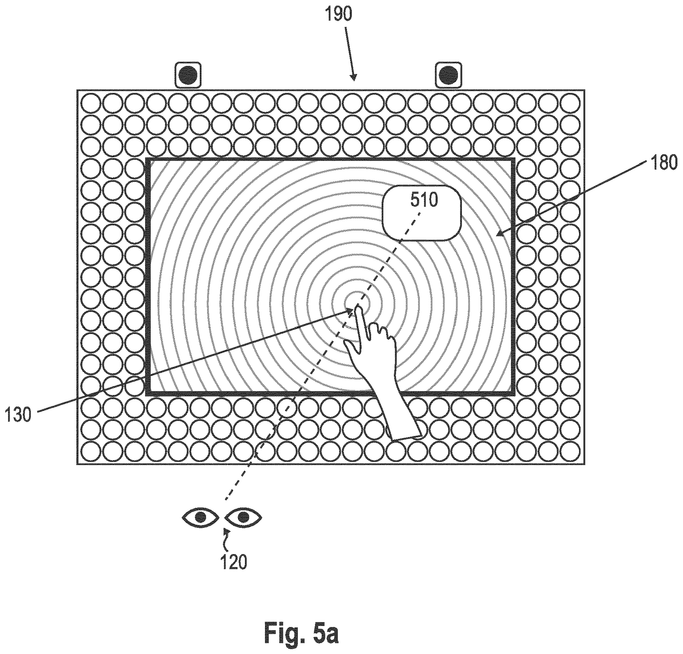

To add a tactile dimension, an emitter of a contactless tactile feedback system can be used to give tactile feedback to the user. For example, the system may be configured to control an emitter 190 of a contactless tactile feedback system based on the selected user interface element, and to provide tactile feedback to the user using the emitter according to selected user interface element. For example, as discussed in connection with Figs. 5a to 5e, the emitter 190 may be one of an ultrasound emitter or array of ultrasound emitters, one or more laser emitters, one or more air emitters, or one or more magnetic field emitters. For example, when the imaginary line intersects with a user interface element (and the user interface element is thus selected), tactile feedback may be given. Similarly, tactile feedback can be given when the user interface is being controlled, e.g., if a button is actuated by a clicking gesture or a rotational input/knob is rotated using a rotational gesture.

In some examples, different levels or patterns of tactile feedback may be given. for example, a first level or first pattern of tactile feedback may be given when the user interface element is selected, and a second level or second pattern of tactile feedback may be given while the user interacts with the user interface element. A third level or third pattern of tactile feedback may be given when the user reaches a boundary, e.g., while controlling the user interface element via gesture control. For example, if the user controls a virtual rotational element (e.g., rotational knob) via gesture control, the third level or third pattern of tactile feedback may be provided when the rotational element is at an extreme position (e.g., lowest or highest allowed position).

In the following, an example implementation are shown. In Fig. 1f, an example is shown where the user interface is displayed on a display device (such as a 3D screen). Alternatively, the user interface 100 may be a projected user interface, e.g., a user interface that is projected onto a projection surface (not shown). Fig. 1f shows a schematic diagram of examples of points of reference when the user interface is shown on a screen. Fig. 1b shows a user interface 100. Two stereo cameras 170 are arranged above (or below) the user interface 100, having two partially overlapping fields of view 170a, 170b. The stereo cameras provide stereo imaging sensor data, which are used to determine the two points of reference - the first point of reference 120 at the position of an eye 12 of a user 10, and the second point of reference 130 at the position of a fingertip 16a (of the index finger) of the hand of the user. Through the first and second point of reference, an imaginary line 140 is projected, pointing at a position in the user interface 100. If a user interface element overlaps with the imaginary line, it may be selected.

Such ways of controlling a user interface are particularly useful in scenarios, where, due to hygiene, a user is unable to control the user interface by touch. Such a scenario can, for example, be found in surgical theatres, where a surgeon seeks to control a surgical imaging device, such as a surgical microscope or surgical exoscope (also sometimes called an extra-corporeal telescope), or other devices, such as an endoscope, an OCT (Optical Coherence Tomography) device. Exoscopes are camera-based imaging systems, and in particular camera-based 3D imaging systems, which are suitable for providing images of surgical sites with high magnification and a large depth of field. Compared to microscopes, which may be used via oculars, exoscopes are only used via display modalities, such as monitor or a head-mounted display. Such devices are usually part, or attached to, a surgical imaging system, such as a surgical microscope system or a surgical exoscope system. Thus, the system may be configured to control a user interface of the surgical microscope system (and connected devices). Fig. 1g shows a schematic diagram of an example of a surgical imaging system comprising the system 110. In the case shown in Fig. 1g, the surgical microscope system shown in Fig. 1g comprises a base unit 20, which houses the system 110. Using the projection device 185, the three-dimensional user interface may be projected, e.g., onto the base unit 20 of the surgical imaging system or onto a projection screen, or the three-dimensional user interface may be shown on a large 3D display device of the surgical imaging system. During surgery, the surgeon (or an assistant) may point towards the three-dimensional user interface and control the three-dimensional user interface using hand gestures.

In some examples, the system 110 may be an integral part of such a surgical imaging system and may be used to control various aspects of the optical imaging system 100. In particular, the system 110 may be used to process imaging data of an imaging device (e.g., the microscope or exoscope) of the optical imaging system, and to generate a display signal based on the image data. Therefore, the system 110 may also serve as an image processing system of the surgical imaging system. In addition, the system 110 may be configured to control additional aspects of the surgical imaging system, such as an illumination provided by the surgical imaging system, a placement of the imaging device relative to a surgical site being imaged, or one or more auxiliary surgical devices being controlled via the surgical imaging device.

A surgical imaging system is an optical imaging system 100 that comprises a (surgical) imaging device, such as a digital stereo microscope, an exoscope or an endoscope, as imaging device. However, the proposed concept is not limited to such embodiments. For example, the imaging device is often also called the "optics carrier" of the surgical imaging system.

The one or more interfaces 112 of the system 110 may correspond to one or more inputs and/or outputs for receiving and/or transmitting information, which may be in digital (bit) values according to a specified code, within a module, between modules or between modules of different entities. For example, the one or more interfaces 112 may comprise interface circuitry configured to receive and/or transmit information. The one or more processors 114 of the system 110 may be implemented using one or more processing units, one or more processing devices, any means for processing, such as a processor, a computer or a programmable hardware component being operable with accordingly adapted software. In other words, the described function of the one or more processors 114 may as well be implemented in software, which is then executed on one or more programmable hardware components. Such hardware components may comprise a general-purpose processor, a Digital Signal Processor (DSP), a micro-controller, etc. The one or more storage devices 116 of the system 110 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the system are mentioned in connection with the proposed concept, or one or more examples described above or below (e.g., Fig. 2 to 6). The system may comprise one or more additional optional features corresponding to one or more aspects of the proposed concept, or one or more examples described above or below.

Fig. 2 shows a flow chart of an example of a method for controlling a user interface, e.g., in line with the system shown in connection with Figs. 1a to 1g. The method comprises determining 210 a position of a pointing indicator used by a user relative to a three-dimensional user interface. The method comprises selecting 220, based on the position of the pointing indicator, a user interface element of the three-dimensional user interface. The method further comprises controlling 230 the user interface to change a display position of the selected user interface element in the three-dimensional user interface based on the position of the pointing indicator, such that the selected user interface elements appears to be positioned at a pre-defined distance to the pointing indicator.

For example, the method may be performed by the system and/or surgical imaging system introduced in connection with one of the Figs. 1a to 1g, 3a to 6. Features introduced in connection with the system and optical imaging system of Figs. 1a to 1g, 3a to 6 may likewise be included in the corresponding method.

More details and aspects of the method are mentioned in connection with the proposed concept, or one or more examples described above or below (e.g., Fig. 1a to 1g, 3a to 6). The method may comprise one or more additional optional features corresponding to one or more aspects of the proposed concept, or one or more examples described above or below.

Various examples of the present disclosure relate to a concept for a contactless 3D-user interface (UI), and in particular to improved or optimized contactless control via a 3D UI.

In touch-based interface, the following input modalities and affordances are used. For example, touch-screen based user interfaces typically utilize virtual control elements such as buttons and sliders as touch controls. Moreover, in computer interfaces, e.g., on webpages, it is common to use an animation, such as a hover effect or a rollover effect, on some elements, such as buttons, when the mouse pointer is over them.

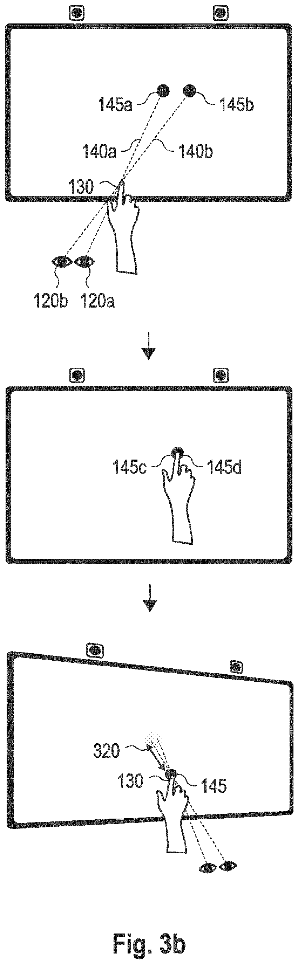

Such existing UI elements are designed for touchscreens or regular screens. However, the user's view is unnatural for contactless control, where the user's fingertip is at a non-negligible distance from the 3D display. This is due to the stereoscopic nature of human vision, as shown in Fig. 3a. Figs. 3a and 3b shows an illustration of a user's stereoscopic perception of a user interface element, such as a button 140, in a three-dimensional user interface. In Figs. 3a and 3b, the respective upper image indicates what the screen shows, the respective middle image indicates what the user sees, and the respective lower image shows what the user perceives. Fig. 3a shows the perception of the user without, and Fig. 3b shows the perception of the user with application of the proposed concept. In the upper image of Fig. 3a, the position of the eyes 120a; 120b are shown, together with the position of the pointing indicator 130 (e.g., finger) and two imaginary lines 140a; 140b originating from the positions of the eyes 120a; 120b and terminating at two different points of the user interface. The user interface element 145 is between the two termini of the imaginary lines. As a result, the user perceives the user interface element 145 at two different positions 145c; 145d, depending on the eye being used. This results in the perception of a virtual distance 310 between the position of the pointing element and the position of the user interface element 145. The stereoscopic vision prevents the user from seeing the fingertip overlaying a virtual button as if they were physically at the same distance. On the contrary, the user sees either two buttons 145a; 145d or two fingertips, depending on where the user is focusing. As a result, some users tend to resolve this perception conflict by closing one eye. Even if the previous limitation was not an issue, the interaction with a virtual button is not natural, as the button does not appear as it could be physically reached and pushed by the fingertip.

A major insight of the proposed disclosure is to visualize the virtual control elements, such as button, sliders, and rotating knobs, at a distance close to the finger and thus make the user experience more natural. Fig. 3b shows an illustration of the desired effect. In Fig. 3b, the user interface element 145a; 145b is shown at two different positions in the user interface. As a result, as shown in the middle image, the perceived position 145c; 145d is the same for both eyes, such that the user interface element 145 appears to be at the position of the pointing indicator 130 (shown in the lower image of Fig. 1b). As a result, there is a virtual distance 320 between the user interface element and the baseline of the three-dimensional user interface (indicated by the drop shadow). This is enabled by the ability of 3D displays to easily visualize virtual buttons (or other 3D control elements) at different distances between the screen and the observer. The desired user experience is that when the user's fingertip approaches the virtual button, the button's disparity is increased so that the button appears to be close to the fingertip, as if the button promptly lands at reach distance to be pressed. In addition to the natural and intuitive experience for the user, this animated movement of the button serves as an unmistakable confirmation that the specific control is active. Moreover, the alignment of the fingertip and the button does not cause any stereoscopic confusion and neither the fingertip nor the button appear as "stereoscopic ghosted" (see middle image in Figs. 3a and 3b).

In the previous discussion, the user interface element was assumed to be a button. However, the virtual control element (i.e., the user interface element) may include a variety of types such as rotating knobs (see Fig. 4), sliders, buttons, switches etc. Fig. 4 shows use of a rotating button as user interface element 145, having a virtual distance to the baseline of the user interface. A rotation button can be a very intuitive way for adjustments.

The Hover effect animation of the button moving closer to the user's hand can help the user to shape the desired perception of the virtual button being located within reach distance from the hand. Stereoscopic/3D displays suffer from limitations that limit the ability to trick the brain into believing that the displayed object is three-dimensional. For example, although the right-left eye disparity can be easily achieved, the focus distance of the human eye informs the brain that the displayed object is not at the virtual distance.

More details and aspects of the three-dimensional user interface are mentioned in connection with the proposed concept, or one or more examples described above or below (e.g., Fig. 1a to 2, 5a to 6). The three-dimensional user interface may comprise one or more additional optional features corresponding to one or more aspects of the proposed concept, or one or more examples described above or below.

As outlined in connection with Figs. 1a to 4, haptic feedback (also denoted tactile feedback) may be used to improve the intuitiveness of using the user interface.

In the following, an example of contactless haptic (or tactile) feedback is given. Haptic feedback is valuable in medical devices like surgical microscopes because it enhances the surgeon's precision and control during delicate procedures. By providing real-time touch sensations, haptic feedback allows the surgeon to better gauge the applied force and spatial orientation, ultimately improving the accuracy and safety of the operation.

In the following, it is proposed to use contactless haptic feedback in contactless control of devices such as surgical microscopes.

For example, various technologies may be used to provide haptic feedback. For example, ultrasound-based haptic feedback may be used. By utilizing focused ultrasonic waves, this technology creates contactless haptic feedback through the generation of pressure points in mid-air, allowing users to feel tactile sensations without touching a physical surface. For example, Inami, M., Shinoda, H., & Makino, Y. (2018): "Haptoclone (Haptic-Optical Clone) for Mutual Tele-Environment" provide an example of ultrasound-based haptic feedback. As an alternative, laser-based haptic feedback may be used. Using laser-induced plasma, this method generates haptic feedback by creating a shockwave in the air, producing a touch sensation when interacting with the plasma. For example, Futami, R., Asai, Y., & Shinoda, H. (2019): "Hapbeat: Contactless haptic feedback with laser-induced plasma" shows the use of haptic feedback based on laser-induced plasma. Another technology generates air vortices. Controlled air vortices are to deliver targeted haptic feedback without physical contact, enabling users to experience a touch-like sensation from a distance. Sodhi, R., Poupyrev, I., Glisson, M., & Israr, A. (2013): "AIREAL: Interactive tactile experiences in free air" give an example of this technology. Another alternative is the user of electromagnetic haptic feedback: By manipulating magnetic fields, this technique generates contactless haptic feedback that can simulate various textures and sensations, allowing users to interact with virtual or remote objects in a more realistic manner. Wang, M., Zhang, X., & Zhang, D. (2014): "Magnetic Levitation Haptic Interface Based on Spherical Permanent Magnet" is an example of the application of this technology. Some of the above-referenced techniques may be used as part of wearable devices to provide contactless feedback. Innovations in wearable technology, such as smart gloves, utilize combinations of the aforementioned techniques to provide haptic feedback without direct skin contact, offering enhanced user experiences in virtual reality, gaming, and medical applications (see, for example, Kim, Y., Yoo, B., & Choi, S. (2018): "A Wearable Vibrotactile Haptic Device for Virtual Reality: Design and Implementation"). Another known technique is the use of vibration modules is mobile phones to provide haptic feedback that resembles pressing a physical button.

Contactless control is not widely used, and the combination of contactless control and haptic feedback is only discussed as a proof of concept. As a result, in the proof-of-concept studies, the design is still on a basic level, primarily aiming on merely simulating the haptic feedback of touching an object. However, contactless control in three-dimensional space allows a wide variety of use and implementation of haptic feedback, which is not known from the aforementioned proof-of-concept implementations. Moreover, contactless control of devices, such as a microscope, is still an unexplored space.

In the following, a concept is provided for improving the user experience of contactless control by adding contactless haptic feedback. In various examples of this concept, a 3D space map may be used that defines the type of feedback to be provided to the user by any type of contactless haptic creation technology such as ultrasound. Fig. 5a illustrates an example implementation of the concept using ultrasound emitters 190. In this implementation, a contactless control monitor is equipped with ultrasound emitters arranged perimetrically around the monitor frame. Fig. 5a shows a schematic drawing of a display device 180 with ultrasonic emitters 190. In the example of Fig. 5a, the ultrasound emitters 190 are arranged at a frame of the display device 180, surrounding a display area of the display device. When the user, shown by the first and second points of reference 120; 130 at the eyes of the user and the finger of the user uses contact-less control to control a virtual button 510 of the user interface, the ultrasound waves (shown as circles) focus at the finger 130 of the user.

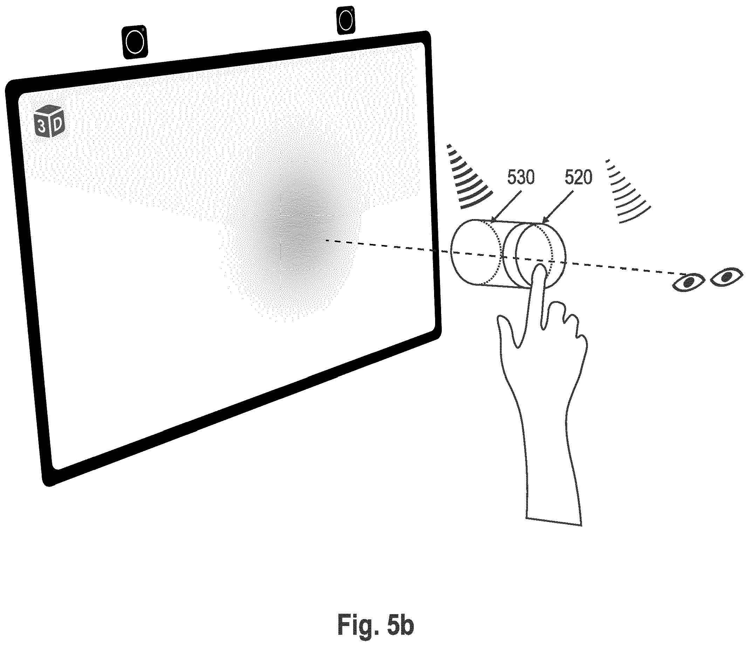

Fig. 5b shows a schematic drawing of haptic zones with different tactile feedback, and in particular the concept of zones of feedback. In Fig. 5b, 3D-zones are defined where the fingertip/hand will receive different type of haptic feedback. In this example the virtual button defines two zones: the "button stand-by zone" 520 (when the fingertip is aligned with the button) where a week haptic feedback informs the user that the fingertip is at a position that the user can press a virtual button (i.e., the finger is aligned with the button). The other zone is the "button activation zone" 530 (when the button is pressed) which provides feedback that the virtual button is pressed (akin to confirmation of a click).

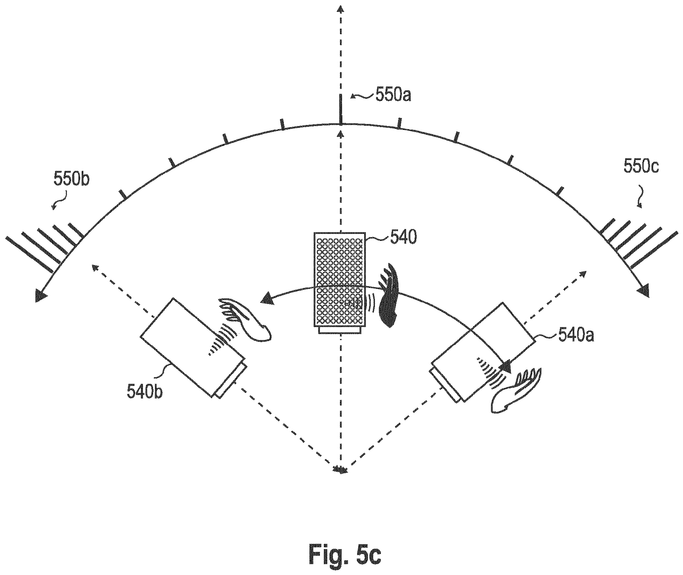

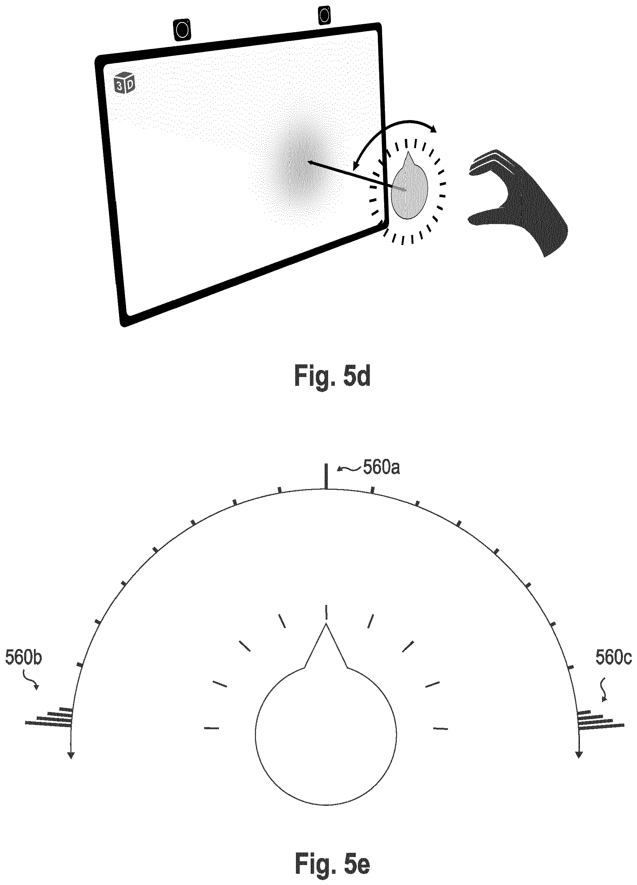

When controlling a device, such as a microscope, via gesture control, in particular alignment control is of great importance and value for the users (e.g., surgeons). However, the lack of feedback makes the contactless control counterintuitive, awkward in feeling, and as a result slows down the process. An important aspect of the use of contactless haptic feedback is to provide haptic feedback control a device and thus improve the experience and efficiency of the microscope control. Fig. 5c illustrates an example of haptic feedback in the contactless control of a microscope positioning. Fig. 5c shows a schematic drawing of haptic feedback while moving a microscope. Fig. 5c shows a microscope 540 (which is equipped with ultrasound emitters, shown as circles), which can be moved between two positions 540a; 540b, which may be considered virtual boundaries, and which define an angle adjustment range. While moving the orientation of the microscope, the microscope stays orientated towards a surgical cavity. In the example shown the user's hand moves near to the microscope and when enters a predefined distance, then the microscope locks and follows the user's hand. The haptic feedback serves a guide for the alignment and as confirmation of the user's actions. For this purpose, haptic confirmation 550a is given when the device is engaged, less pronounced haptic feedback (indicated by the short bars between the extreme positions and the middle position) is given during movement, and increasingly strong haptic feedback 550b, 550c is given as haptic warning indicating that the boundary is reached. In Figs. 5c and 5e, the intensity of the haptic feedback increases, the more the respective bars extend from the arrowed circle indicating the angle. A way to describe the concept of programming the haptic feedback is to define 3D boundaries and zones which define the type of haptic feedback. In this example the virtual boundaries 540a, 540b are derived by the microscope's physical limitations of adjustment range, i.e., the microscope arm cannot move beyond. Alternatively, the virtual boundaries could be determined by other limitations such as the alignment with the surgical cavity, i.e., the microscope is restricted within the angles that allow to look in the surgical cavity.

In addition to the 3D boundaries and zones described above, which are fixed in space, zones and boundaries positioned relative to the microscope's position can also be useful. For example, when the hand is used to virtually move and guide the microscope, there can be defined a "virtual grabbing zone" which is always around the microscope. This means that there is an area that when the hand is in then it can be recognized as a potential control guide. In that case it would be useful to provide haptic feedback as to if the user's hand is at correct spot.

Figs. 5d and 5e illustrate an example of haptic feedback designed for a specific type of control, in this case a rotation knob. Figs. 5d and 5e show schematic drawing of haptic feedback while operating a rotational user interface element via gesture control. The haptic feedback pattern shown in Fig. 5e, represents the feedback during the rotation of the virtual knob shown in Fig. 5d, and provides three message types: (i) That the end of the rotation range is being reached by offering a gradually increasing haptic intensity 560b, 560c near the range end (i.e., haptic feedback that the boundary is reached), (ii) confirmation of the rotation by providing discrete haptic clicks resembling a real rotation knob (the smaller bars between the extremes and the middle, and (iii) confirmation that the knob is at the zero position (i.e., haptic feedback 560a that the device is engaged). The haptic feedback is not restricted in the rotation feedback as shown in Figs. 5d and 5e, but can also assist the user to align the hand and thus have more confident in the use of a control element, and consequently use the interface easier and faster. Examples of alignment feedback is to provide haptic confirmation (i) when the hand is aligned, and (ii) when the gesture is recognized, (iii) when the hand is getting misaligned during the use of the control element, and (iv) when the gesture is getting difficult to be recognized.

For example, the haptic feedback may be used to guide the user in the three-dimensional user interface discussed in connection with Figs. 1a to 4. For example, the system 110 of Fig. 1a may be configured to control an emitter of a contactless tactile feedback system, such as one or more ultrasound emitters, one or more laser emitters, one or more air emitters or one or more magnetic field emitters to provide tactile feedback in response to the user controlling the selected user interface element (e.g., when the user actuates the user interface element or performs gesture control on the user interface element), or in response to the user selecting the user interface element (i.e., to indicate that the user interface element is selected). For example, the haptic feedback one of the examples shown in Figs. 5a to 5e may be provided by the system controlling an emitter of a contactless tactile/haptic feedback system.

The example shown in Figs. 5d and 5e illustrates a rotating knob, but the same concept can be extended in other virtual control elements such as a sliding bar, and a switch. The goal of the haptic feedback in virtual controls is to resemble the experience of a physical control unit, so the user can have a natural, intuitive and efficient utilization.

As a result of the contactless tactile feedback, the user may have a natural and intuitive experience. The confirmation may offer certainty to the user about whether the contactless control is activated or not. The intuitive and assertive experience may allow the user to use the virtual control faster and more efficiently. The confirmation may also reduce errors, i.e. false unintentional activation, misinterpretation of gestures, and activation failures.

More details and aspects of the contactless haptic/tactile feedback are mentioned in connection with the proposed concept, or one or more examples described above or below (e.g., Fig. 1a to 4, 6). The contactless haptic/tactile feedback may comprise one or more additional optional features corresponding to one or more aspects of the proposed concept, or one or more examples described above or below.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

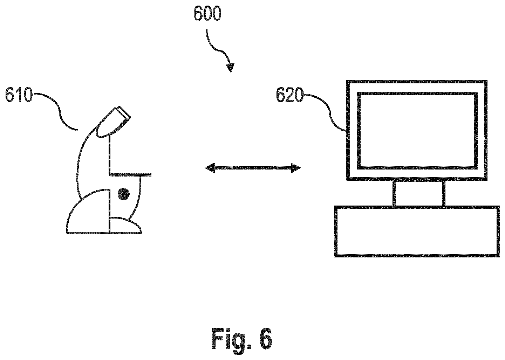

Some embodiments relate to an imaging device, such as a microscope or exoscope, comprising a system as described in connection with one or more of the Figs. 1a to 5e. Alternatively, an imaging device, such as a microscope or exoscope, may be part of or connected to a system as described in connection with one or more of the Figs. 1a to 5e. Fig. 6 shows a schematic illustration of a system 600 configured to perform a method described herein. The system 600 comprises an imaging device 610 (such as a microscope or exoscope) and a computer system 620. The imaging device 610 is configured to take images and is connected to the computer system 620. The computer system 620 is configured to execute at least a part of a method described herein. The computer system 620 may be configured to execute a machine learning algorithm. The computer system 620 and imaging device 610 may be separate entities but can also be integrated together in one common housing. The computer system 620 may be part of a central processing system of the imaging device 610 and/or the computer system 620 may be part of a subcomponent of the imaging device 610, such as a sensor, an actor, a camera, or an illumination unit, etc. of the imaging device 610.

The computer system 620 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 620 may comprise any circuit or combination of circuits. In one embodiment, the computer system 620 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 620 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 620 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 620 may also include a display device, one or more speakers, and a keyboard and/or controller, which can include a mouse, trackball, touch screen, voice-recognition device, or any other device that permits a system user to input information into and receive information from the computer system 620.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g., words or sentences) and associated training content information (e.g., labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm. Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied, and an unsupervised learning algorithm may be used to find structure in the input data (e.g., by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g., be used to store, manipulate, or apply the knowledge.

Machine-learning algorithms are usually based on a machine-learning model. In other words, the term "machine-learning algorithm" may denote a set of instructions that may be used to create, train, or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e., to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

### List of reference Signs

- 10: User
- 12: Eye
- 16: Pointing indicator
- 20: Base unit
- 100: Screen, user interface
- 110: System
- 120: Position on body, eye, first point of reference
- 130: Pointing indicator, second point of reference
- 140: Imaginary line
- 145: User interface element
- 150: Camera sensor
- 160: Depth sensor
- 170: Stereo sensor
- 180: Display device, screen
- 185: Projection device
- 190: Emitter of a contactless tactile feedback system
- 210: Determining a position of a pointing indicator
- 220: Selecting a user interface element
- 230: Controlling a user interface to change a display position of a selected user interface element
- 310: Virtual distance
- 320: Virtual distance
- 410: Virtual distance
- 510: Virtual button
- 520: Button activation zone
- 530: Button stand-by zone
- 540: Microscope with ultrasound emitters
- 540a, 540b: Virtual boundaries for microscope
- 550: Haptic confirmation that the device is engaged
- 550a, 550b: Haptic warning that the boundary is reached
- 560: Haptic confirmation that the device is engaged
- 560a, 560b: Haptic warning that the boundary is reached
- 600: System
- 610: Optical/surgical imaging system
- 620: Computer system

## Claims

1. A system (110) for controlling a user interface (100), the system comprising one or more processors (114), wherein the system is configured to:
determine a position of a pointing indicator (130) used by a user relative to a three-dimensional user interface;
select, based on the position of the pointing indicator, a user interface element (145) of the three-dimensional user interface; and
control the user interface to change a display position of the selected user interface element in the three-dimensional user interface based on the position of the pointing indicator, such that the selected user interface elements appears to be positioned at a pre-defined distance from the pointing indicator.

2. The system according to claim 1, wherein the pointing indicator is one of a finger of the user and a pointing device held by the user.

3. The system according to one of the claims 1 or 2, wherein the system is configured to control the user interface to change the display position of the selected user interface element in the three-dimensional user interface to a position that appears to be at a distance of at most 5 cm from the position of the pointing indicator.

4. The system according to one of the claims 1 to 3, wherein the system is configured to determine a position of at least one point (120a; 120b) on a body of the user relative to the three-dimensional user interface, and to select the user interface element further based on the position of the at least one point on the body.

5. The system according to claim 4, wherein the system is configured to project at least one imaginary line (140) through the at least one position of the point on the body and the position of the pointing indicator towards the user interface, and to select the user interface element based on an intersection of the at least one imaginary line and the three-dimensional user interface.

6. The system according to one of the claims 4 or 5, wherein the system is configured to determine the display position of the selected user interface element further based on the position of the point on the body.

7. The system according to one of the claims 1 to 6, wherein the system is configured to control the user interface to animate a transition of the display position of the selected user interface element from an initial display position of the selected user interface element to the display position at the pre-defined distance from the pointing indicator.

8. The system according to one of the claims 1 to 7, wherein the system is configured to control the user interface to change an opacity of the selected user interface element while the user interface element is shown at the changed display position.

9. The system according to one of the claims 1 to 8, wherein the system is configured to control the user interface to change a shape of the selected user interface element while the user interface element is shown at the changed display position.

10. The system according to one of the claims 1 to 9, wherein the system is configured to control the user interface to sub-divide or extend the selected user interface element into a group of two or more user interface elements, and to control the user interface to set the display position of the group of two or more user interface elements such that the group of two or more user interface elements appears to be positioned at the pre-defined distance from the pointing indicator.

11. The system according to one of the claims 1 to 10, wherein the user interface element is one of a button, a display element, a menu, a radio button, a checkbox, a rotational input, and a slider.

12. The system according to one of the claims 1 to 11, wherein the system is configured to identify a hand gesture being performed by the user, and to control the user interface based on the selected user interface element and based on the identified hand gesture.

13. The system according to one of the claims 1 to 12, wherein three-dimensional user interface is based on providing a first image to a first eye of the user and a second image to a second eye of the user, wherein the system is configured to control the user interface to change the display position of the selected user interface element in the three-dimensional user interface, such that the selected user interface elements appears to be positioned at a pre-defined distance from the pointing indicator, by including the user interface element at different positions (145a; 145b) in the first and second image.

14. A method for controlling a user interface, the method comprising:
determining (210) a position of a pointing indicator used by a user relative to a three-dimensional user interface;
selecting (220), based on the position of the pointing indicator, a user interface element of the three-dimensional user interface; and
controlling (230) the user interface to change a display position of the selected user interface element in the three-dimensional user interface based on the position of the pointing indicator, such that the selected user interface elements appears to be positioned at a pre-defined distance to the pointing indicator.

15. Computer program with a program code for performing the method according to claim 14 when the computer program is run on a processor.
